(19) Europäisches Patentamt

European Patent Office

Office européen des brevets

(11) Veröffentlichungsnummer: **0 160 188**
**B1**

(12) # EUROPÄISCHE PATENTSCHRIFT

(45) Veröffentlichungstag der Patentschrift:
12.08.87

(51) Int. Cl.⁴: **B 60 K 17/344**

(21) Anmeldenummer: 85102867.0

(22) Anmeldetag: 13.03.85

(54) Allradantrieb für Kraftfahrzeuge.

(30) Priorität: 30.03.84 DE 3411746

(43) Veröffentlichungstag der Anmeldung:
06.11.85 Patentblatt 85/45

(45) Bekanntmachung des Hinweises auf die Patenterteilung:
12.08.87 Patentblatt 87/33

(84) Benannte Vertragsstaaten:
DE FR GB IT SE

(56) Entgegenhaltungen:
DE-A-3 216 203
DE-A-3 219 216
FR-A-1 150 493
US-A-4 039 038

(73) Patentinhaber: Adam Opel Aktiengesellschaft,
Bahnhofsplatz 1 Postfach 1560, D-6090
Rüsselsheim (DE)

(72) Erfinder: Victor, Hermann, Ing.(grad)., Bernhard-
Winter- Strasse 43, D-6500 Mainz- Mombach (DE)

(74) Vertreter: Elbert, Karl, Dipl.- Ing., Adam Opel AG
Bahnhofsplatz 1 Postfach 1560, D-6090
Rüsselsheim (DE)

**Beschreibung**

Die Erfindung bezieht sich auf einen Allradantrieb für Kraftfahrzeuge mit einem aus Motor, Kupplung und Schaltgetriebe gebildeten, quer zur Fahrzeuglängsachse eingebauten Antriebsaggregat und einem sich an das Schaltgetriebe anschließenden Verteilergetriebe zur Verteilung des Antriebsmoments auf die Vorder- und Hinterachsen, wobei das Verteilergetriebegehäuse zugleich ein Differentialgetriebe für den Vorderachsantrieb umfaßt und einen Gehäusefortsatz aufweist, der eine zur Hinterachse führende Verteilergetriebe-Abtriebswelle umschließt, und mit einer gleichzeitig die Eingangswelle für Verteilergetriebe und Differentialgetriebe bildenden hohlen Schaltgetriebe-Abtriebswelle, die aus zwei durch eine Zahnkupplung drehverbindbaren Wellenteilen besteht, von denen einer dem Schaltgetriebe zugeordnet und im Schaltgetriebegehäuse gelagert und der andere dem Verteilergetriebe zugeordnet und im Verteilergetriebegehäuse gelagert ist, und wobei das Verteilergetriebegehäuse an einem vom Schaltgetriebe abgewandten Punkt in einem am Antriebsaggregat befestigten, zur Aufnahme axialer Kräfte geeigneten Schwenklager gelagert ist.

Bei einem durch die DE-A- 32 16 203 bekannt gewordenen Allradantrieb sind Schaltgetriebe, Vorderachs-Differentialgetriebe und Verteilergetriebe in einem gemeinsamen, einen großen starren Block bildenden Getriebegehäuse untergebracht, das fest an dem Motorblock angeflanscht ist.

Die DE-A- 32 19 216 zeigt des weiteren einen Allradantrieb, bei dem Schaltgetriebe, Vorderachs-Differentialgetriebe und ein Teil des Verteilergetriebes in einem gemeinsamen Getriebegehäuse zusammengefaßt sind. Ein der Hinterachse zugewandter, einen Winkeltrieb enthaltender zweiter Teil des Verteilergetriebes ist von einem separaten Gehäuse umschlossen, das indessen an das übrige Getriebegehäuse fest angeflanscht ist.

Schließlich ist Stand der Technik ein Allradantrieb der eingangs bezeichneten Art, bei dem Vorderachs-Differentialgetriebe und Verteilergetriebe in einem Gehäuse angeordnet sind, das fest an das Schaltgetriebegehäuse angeflanscht ist.

Allen im vorstehenden genannten Varianten eines Allradantriebes ist der Nachteil gemeinsam, daß die im wesentlichen durch Lastwechsel und Motorvibrationen bedingten Bewegungen des Schaltgetriebeblockes auf den mit diesem fest verbundenen Verteilergetriebeblock übertragen werden. Aufgrund einer durch die Längserstreckung des Verteilergetriebes selbst bedingten, unvermeidlichen Hebelwirkung führt dies an dem der Hinterachse zugewandten rückwärtigen Gehäusefortsatz des Verteilergetriebes zu vergleichsweise großen Ausschlägen, für die am Fahrzeugunterbau ein entsprechender Bewegungsspielraum freigehalten werden muß. Will man den infolgedessen gegebenen hohen Platzbedarf des Verteilergetriebes verringern, so müssen diese Gehäuseausschläge durch entsprechend starke Lagerung des Antriebsaggregats und des Verteilergetriebegehäuses unterdrückt bzw. herabgemindert werden. Dies führt aber wiederum zu nachteiligen starken Verspannungen des gesamten Antriebsstranges. Starke Übertragungen von Vibrationen und Brummgeräuschen auf die Karosserie sind die unerwünschte Folge. Außerdem ist bei der gegebenen starken Lagerbeanspruchung eine frühzeitige Beschädigung dieser Lager zu befürchten.

Bei den im vorstehenden aufgeführten Ausführungen eines Allradantriebes stellen Schaltgetriebe und Verteilergetriebe also eine Einheit dar, die im übrigen nur unter großem Montageaufwand zu demontieren ist.

Aufgabe der vorliegenden Erfindung ist es, die bisherigen starken Verspannungen und Geräuschübertragungen wesentlich zu verringern. Gemäß der Erfindung wird das Problem bei einem Allradantrieb der eingangs bezeichneten Art dadurch gelöst, daß Schaltgetriebegehäuse und Verteilergetriebegehäuse als separate, nicht miteinander verbundene Bauteile ausgebildet und schwenkbar gegeneinander gelagert sind, und daß der Gehäusefortsatz des Verteilergetriebegehäuses in einem am Fahrzeugkörper angeordneten elastischen Universal-Lager gelagert ist, das Axialbewegungen des Gehäusefortsatzes zuläßt und zugleich ein Schwenkgelenk für den Gehäusefortsatz, um eine Querachse desselben, bildet.

Durch die Erfindung werden vorteilhafterweise Relativ-Schwenkbewegungen zwischen dem aus Motorblock und Schaltgetriebe bestehendem Antriebsaggregat und dem Verteilergetriebeblock ermöglicht, so daß Vibrationen des Antriebsaggregates nicht mehr im bisherigen starken Maße auf den Verteilergetriebeblock und damit auch nicht mehr auf die Karosserie übertragen werden können. Eine erhebliche Geräuschdämpfung ist die Folge. Darüber hinaus werden durch die erheblich verringerten Massenträgheitsmomente (Trägheitsradien) die bisherigen starken Lagerbeanspruchungen vermieden. Insbesondere wird die Motorlagerung nicht mehr so hoch beansprucht. Pendelbewegungen des rückwärtigen Verteilergetriebe-Gehäusefortsatzes und damit dessen Platzbedarf reduzieren sich auf ein Minimum. Auch verringert sich die Beanspruchung der Kardanwelle, weil diese nicht mehr so große Schwingungsausschläge erleidet, was ebenfalls die Geräuschentwicklung verringert.

Ein weiterer wesentlicher Vorteil der Erfindung liegt in der vereinfachten Montierbarkeit und Demontierbarkeit des Verteilergetriebeblockes. Das Verteilergetriebe läßt sich in einfacher Weise in das vorhandene Schaltgetriebe einstecken und mittels des Schwenklagers am Motor befestigen. Danach kann das erfindungsgemäße elastische Universal-Lager hinten an der Karosserie bzw. am Fahrzeugunterbau angeschraubt werden. Die Erfindung ermöglicht auf diese Weise auch die einfache Umrüstung eines Schaltgetriebes für Fahrzeuge mit quer eingebautem Motor und ergibt günstigere Einbauverhältnisse gegenüber der bisherigen Ausführung mit fest an dem Schaltgetriebeblock angeflanschten Verteilergetriebe. Die Erfindung bedingt keinerlei Änderungen bei Transport und Einbau des Schaltgetriebes und erleichtert Reparaturen an beiden Getrieben, d.h. an Schaltgetriebe und Verteilergetriebe, ganz erheblich. Durch die Erfindung kann das (bisher verwendete) Schaltgetriebe in seinen Abmessungen und seinem Aufbau nahezu unverändert bleiben.

Ein wesentlicher konstruktiver Vorteil der Erfindung liegt in einer leichteren Anpassung des Verteilergetriebes an verschiedene Motorlagen.

Gegenüber einer an das Schaltgetriebe angeflanschten Ausführung des Verteilergetriebes (s.o.) wird des weiteren durch die Erfindung eine erhebliche Ersparnis an Transport- und Lagerkosten sowie eine verbesserte Servicefreundlichkeit erreicht. Bei Bedarf kann jedes herkömmliche Schaltgetriebe in kürzester Zeit für den Anbau eines Verteilergetriebes umgerüstet werden, weil die Änderungen an dem Schaltgetriebe nur gering sind.

In vorteilhafter Ausgestaltung des Grundgedankens der Erfindung wird vorgeschlagen, daß der dem Schaltgetriebe räumlich zugeordnete erste Wellenteil der Schaltgetriebe-Abtriebswelle mittels zweier einen größtmöglichen Abstand voneinander aufweisender Lager innerhalb des Schaltgetriebegehäuses und der dem Verteilergetriebe räumlich zugeordnete zweite Wellenteil, welcher zugleich die Eingangswelle für das Verteilergetriebe bildet, ebenfalls mittels zweier möglichst weit voneinander entfernter Lager innerhalb des Verteilergetriebegehäuses gelagert ist, und daß das benachbart zu dem angrenzenden Schaltgetriebegehäuse liegende Lager des zweiten Wellenteils zugleich zu einer gegenüber dem Schaltgetriebe um die gemeinsame Längsachse der beiden Wellenteile schwenkbaren Lagerung des gesamten Verteilergetriebes dient.

Die Erfindung ist nun anhand eines Ausführungsbeispieles in der Zeichnung veranschaulicht und nachstehend näher erläutert. Es zeigt:

Fig. 1 eine Draufsicht auf den Vorderwagen (Karosserie weggelassen) eines Personenkraftfahrzeuges,

Fig. 2 eine Draufsicht auf einen bei dem Fahrzeug nach Fig. 1 verwendeten Antriebsstrang für einen Allradantrieb (in gegenüber Fig. 1 vergrößerter Darstellung),

Fig. 3 den Bereich "B" aus Fig. 2 in gegenüber Fig. 2 vergrößerter und ergänzter Darstellung,

Fig. 4 - in Darstellung entsprechend Fig. 3 - eine gegenüber Fig. 3 etwas abweichende Ausführungsform des Bereichs "B" aus Fig. 2 (Radantriebswelle weggelassen),

Fig. 5 eine detaillierte und gegenüber Fig. 2 vergrößerte Darstellung des in Fig. 2 mit "C" bezeichneten Bereichs,

Fig. 6 eine detaillierte, ergänzte und gegenüber Fig. 2 vergrößerte Darstellung des in Fig. 2 mit "D" bezeichneten Bereichs,

Fig. 7 den Gegenstand von Fig. 6, in Rückansicht (Pfeilrichtung E) betrachtet, und

Fig. 8 bis 10 den Antriebsstrang nach Fig. 1 in Seitenansicht (Pfeilrichtung A)

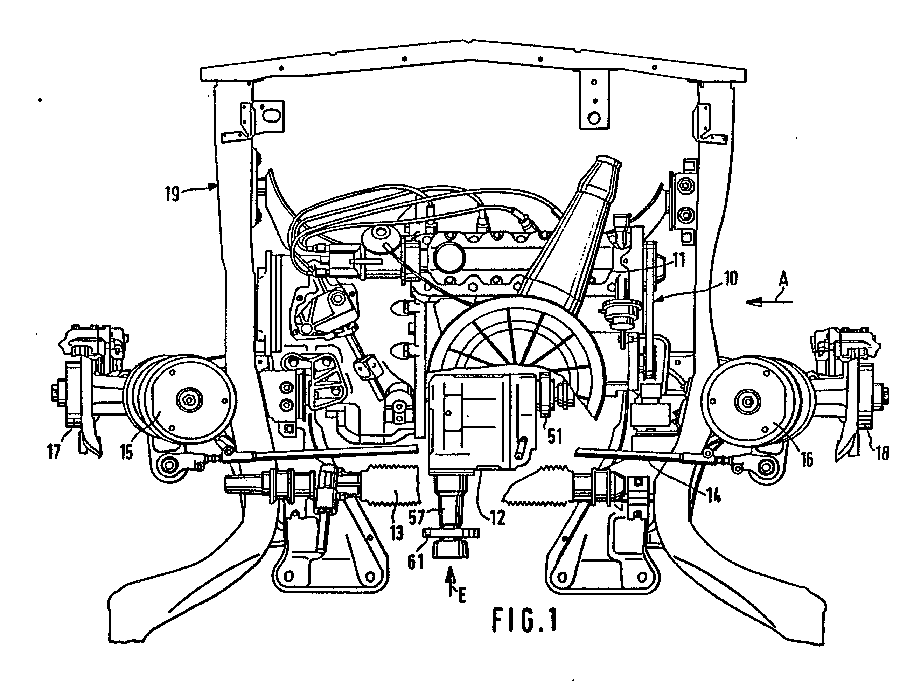

In Fig. 1 ist insgesamt mit 10 ein aus einem querliegenden Verbrennungsmotor 11, einer Kupplung (nicht gezeigt) einem Schaltgetriebe (nicht gezeigt) und einem Verteilergetriebe 12 bestehender Antriebsstrang für einen Allradantrieb des betreffenden Kraftfahrzeuges bezeichnet. Des weiteren zeigt Fig. 1 eine Zahnstangenlenkung 13, ein Lenkgestänge 14 und Federbeine 15, 16 für die Aufhängung der Vorderräder 17, 18. Das Antriebsaggregat 10 ist in üblicher Weise auf einer Rahmenkonstruktion 19 des Wagenaufbaues gelagert.

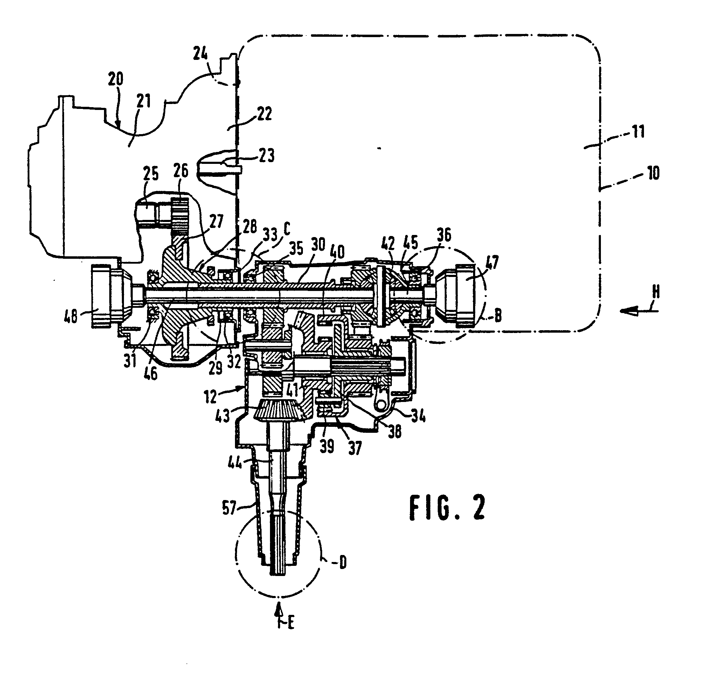

Aus Fig. 2 geht nun das in Fig. 1 nicht gezeigte Schaltgetriebe 20 des Antriebsstranges 10 hervor. Das Schaltgetriebe 20 ist von einem Schaltgetriebegehäuse 21 umgeben, welches in einem unmittelbar an den Motorblock 11 angrenzenden Bereich 22 in üblicher Weise die zur Kraftübertragung vom Verbrennungsmotor 11 auf das Schaltgetriebe 20 erforderliche Kupplung mit umschließt. In dem teilweise aufgebrochen gezeichneten Schaltgetriebe 20 ist ein Teil der mit 23 bezifferten Kupplungswelle erkennbar. Das Getriebegehäuse 21 ist in üblicher Weise bei 24 an den in Fig. 2 in strichpunktierten Linien angedeuteten Verbrennungsmotor-Block 11 angeflanscht. Bei dem Schaltgetriebe 20 kann es sich beispielsweise um ein übliches Viergang- oder Fünfgang-Schaltgetriebe handeln. In dem unteren, in Fig. 2 aufgebrochen gezeichneten Teil des Schaltgetriebes 20 ist eine Getriebewelle 25 mit einem Ritzel 26 erkennbar, welches - mittels eines Zahnrades 27 das Getriebemoment auf eine insgesamt mit 28 bezeichnete Schaltgetriebe-Abtriebswelle überträgt. Die Schaltgetriebe-Abtriebswelle 28 ist hohl ausgebildet und besteht aus einem dem Schaltgetriebe 20 zugeordneten ersten Wellenteil 29 und einem dem Verteilergetriebe 21 räumlich zugeordneten zweiten Wellenteil 30. Der erste Wellenteil 29 ist innerhalb des Schaltgetriebegehäuses 21 an seinen beiden extremen Enden, d.h. bei 31 und 32 gelagert. Der Durchgang der Schaltgetriebe-Abtriebswelle 28 durch das Getriebegehäuse 21 ist durch einen Deckel 33 dichtend umschlossen.

Wie gesagt, bildet der zweite Wellenteil 30 der Schaltgetriebe-Abtriebswelle 28 zugleich die Eingangswelle für das Verteilergetriebe 12. Das Verteilergetriebe 12 ist in Fig. 2 zur besseren Veranschaulichung der in ihm enthaltenen Teile horizontal geschnitten dargestellt. Hierdurch wird deutlich, daß auch das zweite Wellenteil 30, welches die Eingangswelle für das Verteilergetriebe 12 bildet, an zwei Stellen innerhalb des mit 34 bezifferten Verteilergetriebegehäuses gelagert ist, die in Längsrichtung der Wellenteile 29, 30 soweit wie möglich innerhalb des Verteilergetriebegehäuses 34 voneinander entfernt liegen. Als Lager dienen Wälzlager 35, 36. Hierbei fungiert das dem Schaltgetriebe 20 zugewandte Lager 35 zugleich als ein erstes Schwenklager für das Verteilergetriebe 12. D.h. das Lager 35 ermöglicht Schwenkbewegungen des Verteilergetriebes 12 gegenüber dem Schaltgetriebe 20 um die gemeinsame Längsachse der beiden Wellenteile 29, 30 der Schaltgetriebe-Abtriebswelle 28.

Der aus der Schnittdarstellung nach Fig. 2 ersichtliche prinzipielle Aufbau des Verteilergetriebes 12 entspricht im übrigen dem bekannten Stand der Technik. So erfolgt die Übertragung der Antriebskraft auf die Vorderräder 17, 18 des Fahrzeuges (Fig. 1) über ein in dem Verteilergetriebegehäuse 34 ebenfalls integriertes Differentialgetriebe üblicher Bauart, wohingegen die Aufteilung des Antriebsmomentes auf die Vorder- und Hinterräder des Fahrzeuges über einen Planetenradsatz 37 vorgenommen wird. Hierbei wird die von einem Planetenradträger 38 über Planetenräder 39 eingeleitete Antriebskraft (Drehmoment) auf ein (äußeres) Zahnrad 40 mit Innenzahnkranz und auf ein Sonnenrad 41 übertragen bzw. verteilt. Das Zahnrad 40 steht mit dem bereits erwähnten, in Fig. 2 mit 42 bezifferten Differentialgetriebe für die Vorderräder 17, 18 und das Sonnenrad 41 über ein Kegelrad 43 mit einer zur (nicht gezeigten) Hinterachse des Fahrzeugs führenden Abtriebswelle 44 des Verteilergetriebes 12 in Antriebsverbindung.

Fig. 2 macht weiterhin deutlich, daß innerhalb der hohl ausgebildeten Wellenteile 29, 30 der Schaltgetriebe-Abtriebswelle 28 die mit 45 und 46 bezeichneten Antriebswellen für die Vorderräder 17, 18 angeordnet sind. An den äußeren Enden der Antriebswellen 45, 46 ist in üblicher Weise jeweils ein Gleichlaufgelenk 47 bzw. 48 angeordnet.

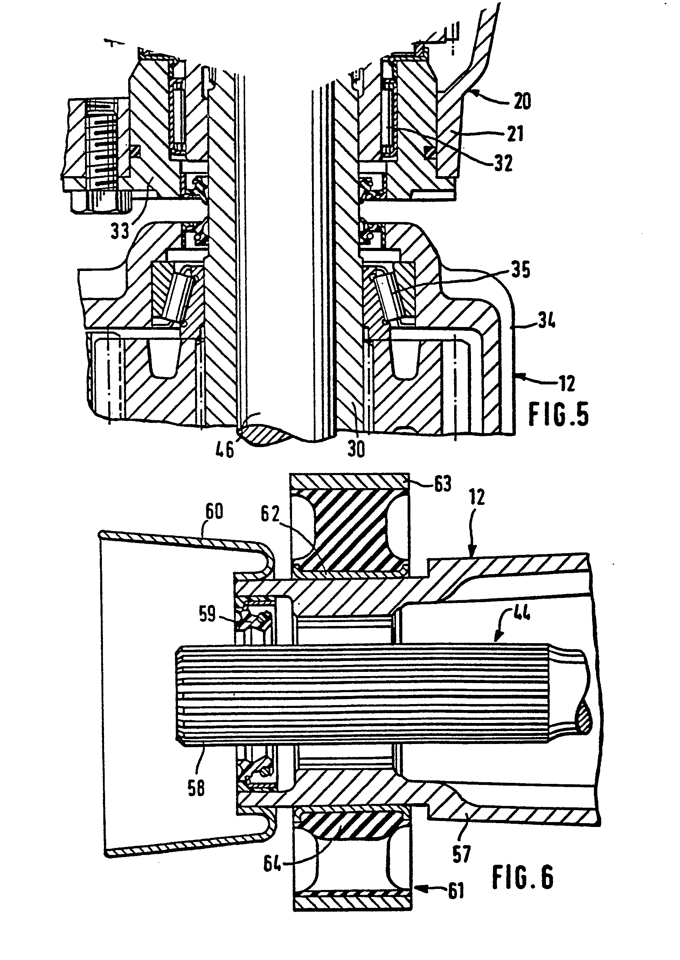

In Fig. 5 ist nun eine Möglichkeit gezeigt, wie der in Fig. 2 mit C bezeichnete Bereich an der Übergangsstelle vom Schaltgetriebe 20 in das Verteilergetriebe 12 im einzelnen gestaltet sein kann. Bei dem Lager 32 des ersten Wellenteils 29 innerhalb des Schaltgetriebegehäuses 21 handelt es sich, wie aus Fig. 5 ersichtlich, um ein Nadellager. Eine Besonderheit besteht hierbei darin, daß der äußere Ring des Nadellagers 32 zugleich von dem den Wellendurchgang dichtend abschließenden Gehäusedeckel 33 gebildet wird. Das angrenzende Lager 35 innerhalb des Verteilergetriebegehäuses 34 ist, wie Fig. 5 zeigt, ein Schrägrollenlager. Es dient - wie bereits oben erläutert - gleichzeitig als erstes Schwenklager für das gesamte Verteilergetriebe 12 gegenüber dem ortsfesten Schaltgetriebe 20. Fig. 5 macht weiterhin deutlich, daß die beiden Wellenteile 29 und 30 in Drehrichtung durch eine Zahnkupplung miteinander verbunden sind. Zu diesem Zweck besitzt das erste Wellenteil 29 eine Innenverzahnung 49, die mit einer entsprechenden Außenverzahnung 50 an dem zweiten Wellenteil 30 in Eingriff steht. Die Montage des gesamten Verteilergetriebes 12 an dem Schaltgetriebe 20 läßt sich demnach in einfacher Weise durch Zusammenstecken der beiden Wellenteile 29 und 30 bewerkstelligen.

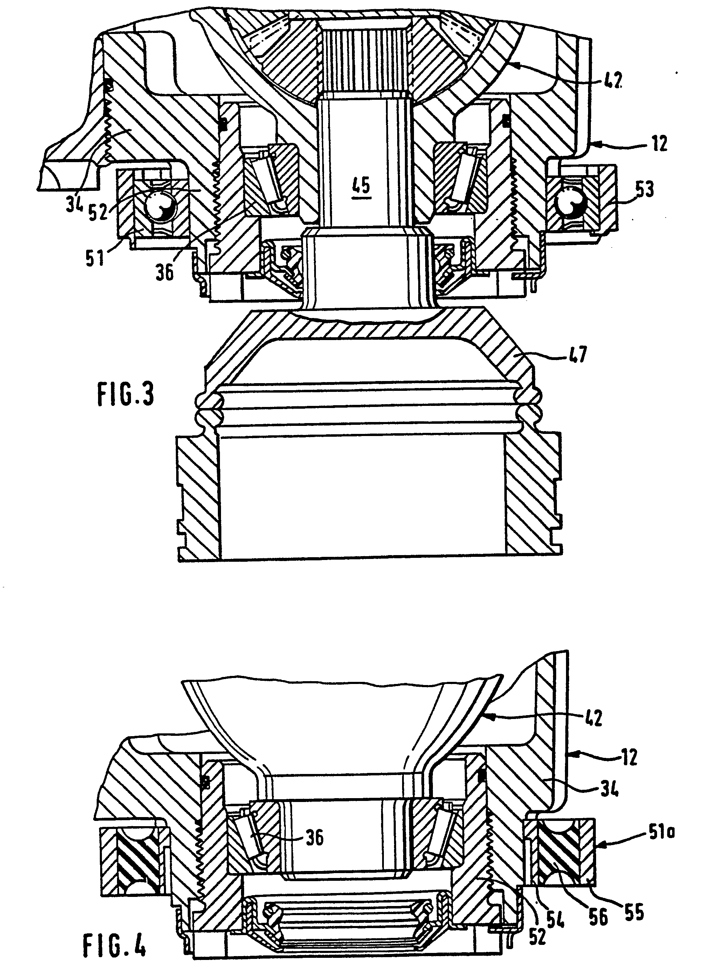

Aus Fig. 3 geht nun hervor, daß das Verteilergetriebe 12 in dem in Fig. 2 mit B bezeichneten Bereich, d.h. an dem vom Schaltgetriebe 20 abgewandten Ende, durch ein zweites Schwenklager 51 gelagert ist. Dieses koaxial zum ersten Schwenklager 35 angeordnete zweite Schwenklager ist, wie Fig. 3 zeigt, ebenfalls als Wälzlager, in diesem Fall jedoch als Kugellager, ausgebildet und umgibt einen mit 52 bezeichneten seitlichen Gehäusefortsatz des Verteilergetriebegehäuses 34. Außen ist das zweite Schwenklager 51 von einem Ring 53 umgeben, der in nicht näher gezeigter Weise mit dem Motorblock 11 verbunden ist. Durch das zweite Schwenklager 51 ist also das Verteilergetriebe 12 auf dem Motorblock 11 abgestützt und gegenüber diesem schwenkbar gelagert.

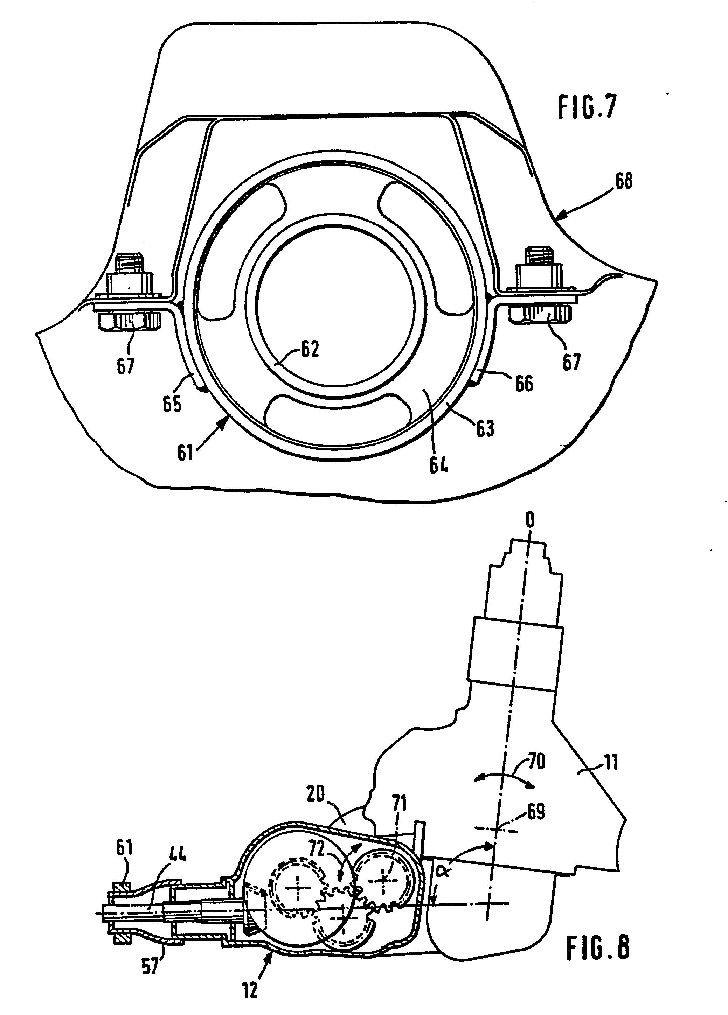

Eine andere mögliche Ausführungsform für ein zweites Schwenklager zeigt Fig. 4. Das zweite Schwenklager ist dort insgesamt mit 51a bezeichnet. Es ist als sog. sphärisches Gummilager ausgebildet und besteht aus einem inneren Ring 54, einem äußeren Ring 55 und zwischen diesen beiden Ringen eingebetteten Gummisegmenten 56. In Fig. 7, auf die weiter unten noch näher eingegangen werden wird, ist ein derartiges sphärisches Gummilager übrigens in Ansicht gezeigt. (Im Zusammenhang mit Fig. 4 ist noch darauf hinzuweisen, daß hier die in Fig. 2 mit 45 bezeichnete Antriebswelle für das rechte Vorderrad weggelassen worden ist.)

Fig. 6 und 7 zeigen nun den in Fig. 2 mit D bezeichneten Bereich des Verteilergetriebes 12 in detaillierterer Darstellung. Es handelt sich hierbei um den rückwärtigen Bereich des Verteilergetriebes 12, d.h. um den zur Hinterachse des Fahrzeuges führenden Abtriebsbereich des Verteilergetriebes 12. Die aus Fig. 2 ersichtliche und bereits erwähnte Abtriebswelle 44 ist von einem rückwärtigen Gehäusefortsatz 57 umschlossen. Das Ende der Abtriebswelle 44 weist eine Verzahnung 58 auf, mittels derer sich eine drehfeste Verbindung zu der sich in rückwärtiger Richtung anschließenden Kardanwelle (nicht gezeigt) herstellen läßt. Der Getriebedurchgang der Abtriebswelle 44 ist durch eine Dichtung 59 abgedichtet und nach außen von einer Manschette 60 umgeben. Wie weiterhin aus Fig. 6 und 7 hervorgeht, ist der rückwärtige Gehäusefortsatz 57 des Verteilergetriebes 12 von einem elastischen Universal-Lager 61 umgeben, welches ebenso wie das zweite Schwenklager 51a nach Fig. 4 als sphärisches Gummilager ausgebildet ist. Es besteht aus einem den Gehäusefortsatz 57 unmittelbar umgebenden inneren Ring 62, einem äußeren Ring 63 und dazwischen einvulkanisierten Gummielementen 64. Wie die Darstellung nach Fig. 7 verdeutlicht (bei der die Teile 44 und 57-60 weggelassen sind), sind an dem äußeren Ring 63 des Lagers 61 zwei Schellenteile 65, 66 angeschweißt, die mittels Schrauben 67 mit dem hier insgesamt mit 68 bezifferten Fahrzeugunterbau verschraubt sind. Das sphärische Gummilager 61 dient somit zur elastischen Abstützung des Verteilergetriebes 12 an dessen rückwärtigem Gehäusefortsatz 57 gegenüber dem Fahrzeugunterbau 68. Das elastische sphärische Gummilager 61 hat die Funktion und ist hierzu in der Lage, geringfügige axiale Verschiebebewegungen des Verteilergetriebes 12 in Richtung der Abtriebswelle 44, die durch Schwenkbewegungen des Verteilergetriebes 12 gegenüber dem Motorblock 11 und dem Schaltgetriebe 20 auftreten, auszugleichen. Das Lager 61 gleicht ferner in diesem Zusammenhang auftretende geringfügige Schwenkbewegungen des Gehäusefortsatzes 57 um eine quer zur Abtriebswelle 44 liegende Achse aus und dient damit als rückwärtiges Schwenklager für das Verteilergetriebe 12. Insgesamt gesehen halten sich aber derartige Axial- und Schwenkbewegungen des Verteilergetriebes 12 an seinem rückwärtigen Ende (bei 57) aufgrund der schwenkbaren Lagerung des Verteilergetriebes 12 bei 35 und 51 in sehr engen Grenzen. Die vorteilhafte Wirkung der Erfindung wird insbesondere aus der Funktionsdarstellung der Fig. 8-10 deutlich.

Es ist zunächst davon auszugehen, daß Bewegungen des Motorblockes 11 mit dem daran fest angeflanschten Schaltgetriebe 20 einmal bei Lastwechseln auftreten sowie ferner durch Vibrationen des Motors 11 infolge von Massenkräften und -momenten verursacht werden. Die Achse, um die der Motorblock 11 zusammen mit dem angeflanschten Schaltgetriebe 20 hierbei schwingt, dürfte daher mit der Mittelachse der Kurbelwelle in etwa zusammenfallen. Die Schwingachse bzw. Kurbelwellen-Längsachse ist in Fig. 8-10 mit 69 bezeichnet. Die Schwingbewegungen des Motorblockes 11 erfolgen dabei in Pfeilrichtung 70. Die Verbindung zwischen dem Antriebsaggregat 11, 20 mit dem Verteilergetriebe 12 ist nun - wie oben ausführlich dargelegt - so gestaltet, daß das Antriebsaggregat 11, 20 gegenüber dem Verteilergetriebe 12 Relativbewegungen ausführen kann. Und zwar ist hierfür die Lagerung des Verteilergetriebes 12 mittels der beiden Schwenklager 32, 51 maßgebend. Die diesbezügliche Schwenkachse stellt sich in Fig.

8-10 als Punkt dar und ist mit 71 beziffert. Die Relativbewegungen zwischen den Blöcken 11, 20 und 12 erfolgen also in Pfeilrichtung 72 um die Schwenkachse 71.

Bei der Darstellung nach Fig. 8 befindet sich das Antriebsaggregat 11, 20 in seiner neutralen Ruhestellung, die durch die Achse 0 gekennzeichnet ist. Der (konstruktiv bedingte) Winkel zwischen der Nullachse des Motorblockes 11 und der Abtriebswelle 44 des Verteilergetriebes 12 ist mit, α bezeichnet. Wäre das Verteilergetriebe 12 fest an dem Antriebsaggregat 11, 20 angeflanscht, so würde bei Schwenkbewegungen des Antriebsaggregats 11, 20 um die Achse 69 der Winkel, α stets konstant bleiben.

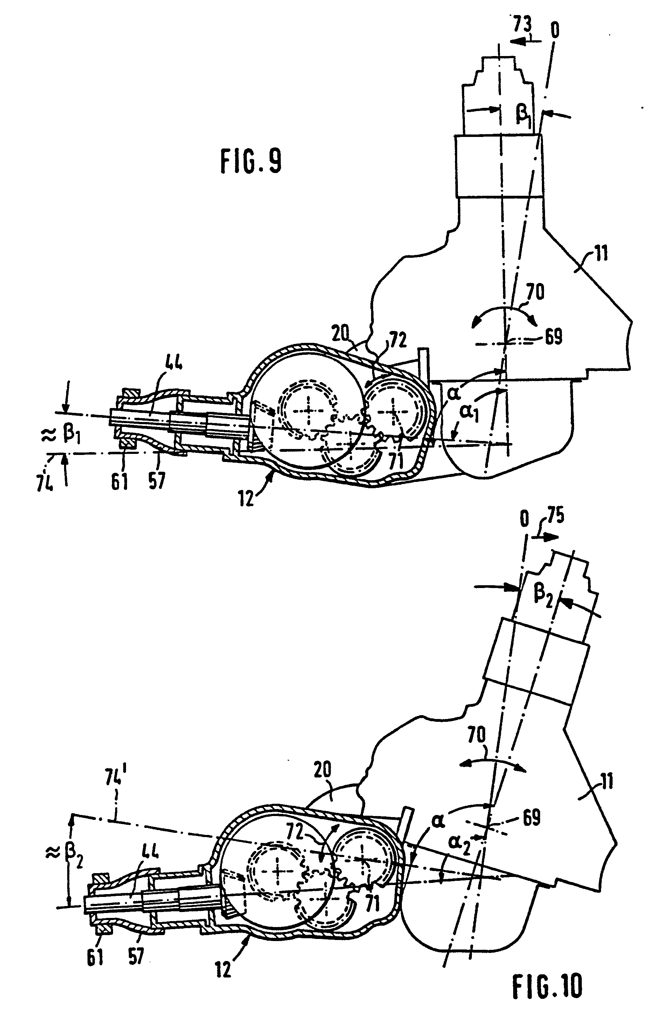

Fig. 9 zeigt nun eine Position, bei der der Motorblock 11 infolge Vibrationen und dergleichen um einen Winkel $\beta_1$ in Pfeilrichtung 73 ausgelenkt ist. Bei starrer Verbindung des Motorblockes 11 und des Verteilergetriebes 12 würde die Abtriebswelle 44 des Verteilergetriebes bzw. das gesamte Verteilergetriebe 12 eine durch eine strichpunktierte Linie 74 angedeutete Stellung einnehmen. Aufgrund der Schwenkmöglichkeit zwischen den Blöcken 11 und 12 um die Schwenkachse 71 nimmt indessen das Verteilergetriebe 12 die gezeigte Stellung ein. Der Winkel zwischen der Nullachse des Motorblockes 11 und der Abtriebswelle 44 des Verteilergetriebes 12 hat sich hierbei auf $\alpha_1$ verkleinert. Das Verteilergetriebe 12 hat also nahezu seine aus Fig. 8 ersichtliche Ruhestellung beibehalten und damit eine nachteilige Schwenkung an seinem rückwärtigen Gehäusefortsatz 57 um einen Winkel, der etwa dem Winkel $\beta_1$ entspricht, vermieden.

Eine ähnliche Situation zeigt Fig. 10. Nur ist hier im Unterschied zu Fig. 9 der Motorblock 11 in Pfeilrichtung 75 aus seiner Nullage heraus ausgelenkt. Auch hier wird wieder die Schwenkbewegung des Motorblockes 11 im Bereich des Verteilergetriebes 12 durch eine Relativschwenkung des letzteren um die Achse 71 nahezu ausgeglichen, so daß auch hier das Verteilergetriebe 12 noch fast die Position einnimmt, die der Ruhestellung nach Fig. 8 entspricht. Hierbei vergrößert sich der Winkel zwischen dem Motorblock 11 und der Abtriebswelle 44 des Verteilergetriebes 12 auf den Wert $\alpha_2$. Bei starrer Verbindung zwischen Verteilergetriebe 12 und Motorblock 11 würde dagegen das Verteilergetriebe an seinem rückwärtigen Ende eine nachteilige Schwenkbewegung ausführen, die etwa dem Winkel $\beta_2$ entspricht. Aufgrund der in der Zeichnung veranschaulichten und im vorstehenden ausführlich beschriebenen schwenkbaren Anordnung des Verteilergetriebes 12 gegenüber dem Antriebsaggregat 11, 20 stellen das Antriebsaggregat 11, 20 einerseits und das Verteilergetriebe 12 andererseits zwei selbständige Einheiten dar, die nicht nur leicht zusammengebaut und auch voneinander getrennt werden können - eine Eigenschaft, die insbesondere beim Ausbau des Verteilergetriebes 12 von großem Vorteil ist -, sondern durch die Schwenkbarkeit des Verteilergetriebes 12 in Verbindung mit seiner Lagerung 61 am rückwärtigen Gehäusefortsatz 57 wird, wie insbesondere aus Fig. 8-10 hervorgeht, darüber hinaus erreicht, daß die mit Motorbewegungen und -vibrationen zusammenhängenden Ausschläge an diesem rückwärtigen Getriebeteil 57 des Verteilergetriebes 12 minimal bleiben. Für geringfügige Winkelbewegung des Verteilergetriebes 12 bildet das rückwärtige elastische Universal-Lager 61 sogar die Drehachse. Außerdem ist das Lager 61 aufgrund seiner Elastizität in der Lage, geringfügige axiale Verschiebewege, die ebenfalls mit den Relativbewegungen zwischen Motorblock 11 und Verteilergetriebe 12 zusammenhängen (kniehebelartige Verbindung des Antriebsaggregats 11, 20 mit dem Verteilergetriebe 12 hinsichtlich der Schwenkachse 71), auszugleichen.

**Patentansprüche**

1. Allradantrieb für Kraftfahrzeuge mit einem aus Motor, (11) Kupplung und Schaltgetriebe (20) gebildeten, quer zur Fahrzeuglängsachse eingebauten Antriebsaggregat und einem sich an das Schaltgetriebe (20) anschließenden Verteilergetriebe (12) zur Verteilung des Antriebsmoments auf die Vorder- und Hinterachsen, wobei das Verteilergetriebegehäuse (34) zugleich ein Differentialgetriebe (42) für den Vorderachsantrieb umfaßt und einen Gehäusefortsatz (57) aufweist, der eine zur Hinterachse führende Verteilergetriebe-Abtriebswelle (44) umschließt, und mit einer gleichzeitig die Eingangswelle (30) für Verteilergetriebe und Differentialgetriebe bildenden hohlen Schaltgetriebe-Abtriebswelle, (28) die aus zwei durch eine Zahnkupplung (49, 50) drehverbindbaren Wellenteilen (29, 30) besteht, von denen einer dem Schaltgetriebe (20) zugeordnet und im Schaltgetriebegehäuse (21) gelagert und der andere dem Verteilergetriebe (12) zugeordnet und im Verteilergetriebegehäuse (34) gelagert ist, und wobei das Verteilergetriebegehäuse (34) an einem vom Schaltgetriebe (20) abgewandten Punkt in einem am Antriebsaggregat befestigten, zur Aufnahme axialer Kräfte geeigneten Schwenklager (51, 51a) gelagert ist,
dadurch gekennzeichnet,
daß Schaltgetriebegehäuse (21) und Verteilergetriebegehäuse (34) als separate, nicht drehfest miteinander verbundene Bauteile ausgebildet und (bei 35, 51) schwenkbar gegeneinander gelagert sind, und daß der Gehäusefortsatz (57) des Verteilergetriebegehäuses (34) in einem am Fahrzeugkörper (68) angeordneten elastischen Universal-Lager (61) gelagert ist, das Axialbewegungen des Gehäusefortsatzes (57) zuläßt und zugleich ein Schwenkgelenk für den Gehäusefortsatz, um eine Querachse desselben, bildet.

2. Allradantrieb nach Anspruch 1,
dadurch gekennzeichnet, daß der dem Schaltgetriebe (20) räumlich zugeordnete erste Wellenteil (29) der Schaltgetriebe-Abtriebswelle (28) mittels zweier einen größtmöglichen Abstand voneinander aufweisender Lager (31, 32) innerhalb des Schaltgetriebegehäuses (21) und der dem Verteilergetriebe (12) räumlich zugeordnete zweiten Wellenteil (30), welcher zugleich die Eingangswelle für das Verteilergetriebe bildet, ebenfalls mittels zweier möglichst weit voneinander entfernter Lager (35, 36) innerhalb des Verteilergetriebegehäuses (34) gelagert ist, und daß das benachbart zu dem angrenzenden Schaltgetriebegehäuse (21) liegende Lager (35) des zweiten Wellenteils (30) zugleich zu einer gegenüber dem Schaltgetriebe (20) um die gemeinsame Längsachse (71) der beiden Wellenteile (29, 30) schwenkbaren Lagerung des gesamten Verteilergetriebes (12) dient.

3. Allradantrieb nach Anspruch 1 oder 2,
dadurch gekennzeichnet, daß das Verteilergetriebegehäuse (34) auf seiner vom Schaltgetriebe (20) abgewandten Seite, jedoch koaxial zu der Schaltgetriebe-Abtriebswelle (28) mittels eines zweiten Schwenklagers (51) am Motorblock (11) gelagert ist (Fig. 3 und 4).

4. Allradantrieb nach Anspruch 3,
dadurch gekennzeichnet, daß das am Motorblock (11) befestigte zweite Schwenklager (51) des Verteilergetriebes (12) als Wälzlager, vorzugsweise Kugellager, ausgebildet ist (Fig. 3).

5. Allradantrieb nach Anspruch 3,
dadurch gekennzeichnet, daß das am Motorblock (11) befestigte zweite Schwenklager (51a) des Verteilergetriebes (12) als elastisches Universal-Lager, vorzugsweise als sphärisches Gummilager, ausgebildet ist (Fig. 4).

6. Allradantrieb nach einem oder mehreren der vorstehenden Ansprüche,
dadurch gekennzeichnet, daß das elastische Universal-Lager (61) für den Gehäusefortsatz (57) des Verteilergetriebes (12) als sphärisches Gummilager ausgebildet ist (Fig. 6 und 7).

**Claims**

1. All-wheel drive for motor vehicles, with a drive unit consisting of engine (11), clutch and gearbox (20) and assembled transversely to the longitudinal axis of the vehicle, and adjoining the gearbox (20) a transfer gearbox (12) for distributing the driving torque to the front and rear axles, the the transfer gearbox housing (34) also including a differential (42) for the front axle drive and comprising a housing extension (57) which surrounds a transfer gearbox output shaft (44) leading to the rear axle, and with a hollow gearbox output shaft (28) which simultaneously forms the input shaft (30) for transfer gearbox and differential and which consists of two shaft portions (29, 30) rotatably connected by a jaw clutch (49, 50), one of which is associated with the gearbox (20) and mounted in the gearbox housing (21) and the other of which is associated with the transfer gearbox (12) and mounted in the transfer gearbox housing (34), the transfer gearbox housing (34) being mounted at a point remote from the gearbox (20) in a pivot bearing (51, 51a) which is attached to the drive unit and adapted to receive axial forces, characterised in that the gearbox housing (21) and transfer gearbox housing (34) are constructed as separate components not connected to each other non-rotatably and mounted so as to pivot relative to each other (at 35, 51), and the housing extension (57) of the transfer gearbox housing (34) is mounted in a flexible universal bearing (61) which is disposed on the vehicle body (68) and which allows axial movements of the housing extension (57) and at the same time forms a pivot joint for the housing extension, about a transverse axis thereof.

2. All-wheel drive according to claim 1, characterised in that the first shaft portion (29) of the gearbox output shaft (28), which is spatially associated with the gearbox (20), is mounted inside the gearbox housing (21) by means of two bearings (31, 32) spaced as far as possible apart from each other, and the second shaft portion (30) which is spatially associated with the transfer gearbox (12) and simultaneously forms the input shaft for the transfer gearbox is also mounted inside the transfer gearbox housing (34) by means of two bearings (35, 36) spaced as far as possible apart from each other, and the bearing (35) of the second shaft portion (30) which is located adjacent to the adjoining gearbox housing (21) simultaneously serves to mount the whole transfer gearbox (12) so as to allow it to pivot relative to the gearbox (20) about the common longitudinal axis (71) of the two shaft portions (29, 30).

3. All-wheel drive according to claim 1 or 2, characterised in that the transfer gearbox housing (34) is mounted on the engine block (11) by means of a second pivot bearing (51) on its side remote from the gear box (20), but coaxially with the gearbox output shaft (28) (Figs. 3 and 4).

4. All-wheel drive according to claim 3, characterised in that the second pivot bearing (51) of the transfer gearbox (12), which is attached to the engine block (11), is constructed as a rolling bearing, preferably a ball bearing (Fig. 3).

5. All-wheel drive according to claim 3, characterised in that the second pivot bearing (51a) of the transfer gearbox (12), which is attached to the engine block (11), is constructed as a flexible universal bearing, preferably a spherical rubber mount (Fig. 4).

6. All-wheel drive according to one or more of the preceding claims, characterised in that the flexible universal bearing (61) for the housing extension (57) of the transfer gearbox (12) is constructed as a spherical rubber mount (Figs. 6 and 7).

**Revendications**

1. Dispositif d'entraînement toutes roues motrices pour véhicules automobiles, constitué par un bloc moteur monté transversalement à l'axe longitudinal du véhicule et comprenant le moteur (11), l'embrayage et la boîte de vitesses (20) et par une boîte de vitesses intermédiaire (12), se raccordant à la boîte de vitesses (20), pour répartir le couple moteur sur les essieux avant et arrière, le carter (34) de la boîte de vitesses intermédiaire renfermant en même temps un différentiel (42) pour la traction avant et comportant un raccord (57) qui entoure un arbre de sortie (44) de la boîte de vitesses intermédiaire aboutissant à l'essieu arrière, et par un arbre de sortie creux (28) de la boite de vitesses lequel, formant à la fois l'arbre d'entrée (30) de la boîte de vitesses intermédiaire et le différentiel, se compose de deux parties d'arbre (29, 30) raccordées en rotation par un embrayage à denture (49, 50) et dont l'une est associée à la boîte de vitesses (20) et montée dans le carter (21) de celle-ci, tandis que l'autre est associée à la boîte de vitesses intermédiaire (12) et montée dans le carter (34) de celle-ci, et le carter (34), en un point situé du côté opposé à la boîte de vitesses (20), étant monté dans un palier pivotant (51, 51a) fixé sur le bloc moteur et destiné à absorber les efforts axiaux, caractérisé par le fait que le carter (21) de la boîte de vitesses et le carter (34) de la boîte de vitesses intermédiaire sont réalisés sous la forme d'éléments de construction séparés, non mutuellement raccordés fixés en rotation et montés pivotable (en 35, 51) l'un par rapport à l'autre, et que le raccord (57) du carter (34) de la boîte de vitesses intermédiaire est monté dans un palier universel élastique (61) qui, placé sur le corps (68) du véhicule, autorise des déplacements axiaux du raccord (57) et forme en même temps pour le raccord une articulation pivotante autour d'un axe transversal de celui-ci.

2. Dispositif d'entraînement toutes roues motrices selon la revendication 1, caractérisé par le fait que la première partie (29), spatialement associée à la boîte de vitesses (20), de l'arbre (28), est montée dans le carter (21) de la boîte de vitesses au moyen de deux paliers (31, 32) ayant le plus grand écartement possible entre eux, tandis que la seconde partie (30) de l'arbre (28), spatialement associée à la boîte de vitesses intermédiaire (12) et formant en même temps l'arbre d'entrée de celle-ci, est montée dans le carter (34) de la boîte de vitesses intermédiaire au moyen de deux paliers (35, 36) ayant le plus grand écartement possible entre eux, et que le palier (35), soutenant la seconde partie (30) de l'arbre (28) et situé à proximité du carter (21), qui lui est limitrophe, de la boîte de vitesses, sert en même temps au montage de l'ensemble de la boîte de vitesses intermédiaire (12) de manière à lui permettre d'exécuter, par rapport à la boîte de vitesses (20), des mouvements de pivotement autour de l'axe longitudinal (71) commun aux deux parties (29, 30) de l'arbre.

3. Dispositif d'entraînement toutes roues motrices selon la revendication 1 ou 2, caractérisé par le fait que le carter (34) de la boîte de vitesses intermédiaire est monté sur le bloc moteur (11) sur son côté opposé à la boîte de vitesses (20), mais coaxialement à l'arbre de sortie (28) de la boîte de vitesses au moyen d'un second palier pivotant (51) (figures 3 et 4).

4. Dispositif d'entraînement toutes roues motrices selon la revendication 3, caractérisé par le fait que le second palier pivotant (51), fixé au bloc moteur (11), de la boîte de vitesses intermédiaire (12), est réalisé sous la forme d'un palier de roulement, de préférence un roulement à billes (figure 3).

5. Dispositif d'entraînement toutes roues motrices selon la revendication 3, caractérisé par le fait que le second palier pivotant (51a), fixé sur le bloc moteur (11), de la boîte de vitesses intermédiaire (12), est réalisé sous la forme d'un palier universel élastique, de préférence sous la forme d'un palier sphérique en caoutchouc (figure 4).

6. Dispositif d'entraînement toutes roues motrices selon l'une ou plusieurs des revendications précédentes, caractérisé par le fait que le palier universel élastique (61) pour le raccord (57) du carter de la boîte de vitesses intermédiaire (12) est réalisé sous la forme d'un palier sphérique en caoutchouc (figures 6 et 7).

FIG.1

FIG. 2

FIG.3

FIG.4

FIG.5

FIG.6

FIG.7

68

62

67

66

65

67

63

61

64

0

70

11

20

71

69

72

61

44

α

57

12

FIG.8

**FIG. 9**

**FIG. 10**